# FASCICULE DE BREVET EUROPEEN

(11) **EP 2 222 983 B1**
(45) Date de publication et mention de la délivrance du brevet: **31.08.2011**
(21) Numéro de dépôt: 08864076.8
(22) Date de dépôt: 17.12.2008
(51) Int. Cl.: F16H 25/22

(54) **ACTIONNEUR ROTOLINEAIRE A ROULEAUX SATELLITES**
ROTOLINEARAKTUATOR MIT SATELLITENWALZEN
ROTOLINEAR ACTUATOR WITH SATELLITE ROLLERS

(30) Priorité: 19.12.2007 FR 0759975
(43) Date de publication de la demande: 01.09.2010
(73) Titulaire: SAGEM Défense Sécurité, 75015 Paris (FR)
(72) Inventeur: MERLET, Etienne, F-75015 Paris (FR); BESOLD, Jean-Eric, F-75015 Paris (FR); WEIBEL, Jean-François, F-75015 Paris (FR)
(74) Mandataire: Cabinet Plasseraud
(86) Numéro de dépôt international: PCT/FR2008/052334
(87) Numéro de publication internationale: WO 2009/081034

(56) Documents cités:
- DE-A1- 2 821 726
- JP-A- 11 063 386
- US-A- 3 331 469
- US-A- 3 454 136
- US-A- 3 595 094

## Description

La présente invention concerne des perfectionnements apportés aux actionneurs rotolinéaires du type comportant :
une tige centrale ayant une face extérieure filetée,
une bague externe entourant sensiblement coaxialement ladite tige centrale et possédant une face intérieure filetée, et
une pluralité de rouleaux satellites filetés qui sont répartis circonférentiellement entre ladite face extérieure de la tige centrale et ladite face intérieure de la bague externe et qui sont en prise avec les faces filetées de la tige centrale et de la bague externe,
l'une de la tige centrale ou de la bague externe étant rotative et bloquée axialement tandis que l'autre respectivement de la bague externe ou de la tige centrale est bloquée en rotation et déplaçable axialement.

Un tel actionneur à rouleaux satellites est divulgué notamment dans le document FR 1 577 532.

Dans le domaine des vis à billes ou à rouleaux, il est connu, afin d'en améliorer les caractéristiques tribologiques, de réaliser un apport de lubrifiant (huile, graisse, lubrifiant solide). Il peut s'agir d'un apport, externe (pour l'huile et la graisse notamment) ou bien aussi du dépôt (en particulier sur la vis) d'un revêtement apte, de par son usure, à libérer progressivement des particules solides lubrifiantes. On connaît également une solution faisant appel à des coussinets intercalaires autolubrifiants disposés entre les billes ou les rouleaux.

Pour ce qui concerne les actionneurs rotolinéaires à rouleaux satellites, si la solution des coussinets intercalaires n'est techniquement pas transposable, la solution de l'apport d'un lubrifiant externe (huile, graisse) demeure possible, et l'on connaît également une solution consistant à former un revêtement lubrifiant solide sur les vis à rouleaux.

Cependant, ces diverses solutions actuellement exploitées nécessitent de renouveler le lubrifiant ou l'organe lubrificateur de manière régulière, à des intervalles de temps plus ou moins longs mais ne couvrant jamais la durée de vie estimée de l'actionneur, et surtout ce renouvellement nécessite la possibilité d'un accès à l'actionneur.

Or, ces conditions ne peuvent pas être réunies dans certains domaines d'application des actionneurs, comme c'est le cas notamment pour les actionneurs électriques de commande de vol d'aéronefs dont la durée de vie sans entretien doit couvrir la durée de vie de l'aéronef.

Pour ce qui concerne l'application spécifique à l'actionnement électrique des commandes de vol d'aéronefs, il est requis, pour l'actionneur, un faible rapport rotation/translation, des matériaux constitutifs durs et raides en raison de pressions de contact élevées, des frottements aussi réduits que possible, et une lubrification à vie (c'est-à-dire pour plusieurs dizaines d'années) ; en outre, pour des raisons de sécurité, l'actionneur doit être réversible. Ces exigences conduisent à retenir des actionneurs rotolinéaires à vis à rouleaux satellites lubrifiées, sachant que le recours à un lubrifiant sec déposé sur la vis et les techniques d'usures progressives de pièces fonctionnelles ne sont pas envisageables en raison de la formation de particules résiduelles susceptibles d'entraîner un grippage de l'actionneur et qu'une lubrification par barbotage est peu souhaitable et serait peu pratique à mettre en oeuvre et peu susceptible de couvrir une aussi longue période de temps.

L'invention a donc pour but de proposer une solution technique originale propre à répondre aux attentes de la pratique en ce qui concerne les exigences d'une lubrification de longue durée et homogène. Le document US 3595094 qui rerésente l'état de la technique le plus proche décrit un actionneur selon le préambule de la revendication 1.

A ces fins, l'invention propose un actionneur rotolinéaire à rouleaux satellites du type exposé au préambule, lequel se caractérise, étant agencé selon l'invention, par les dispositions énoncées dans la partie caractérisante de la revendication 1.

Grâce à la solution technique conforme à l'invention, le lubrifiant est distribué par capillarité avec économie, en quantité juste suffisante et avec précision aux emplacements de contact des organes coopérants, à partir d'une réserve, de sorte que cette réserve, même étant de très faible volume, peut suffire pour la durée de vie de l'actionneur y compris si cette durée de vie est très longue (par exemple estimée à plusieurs dizaines d'années).

Un avantage intéressant de ces dispositions réside dans leur large possibilité d'adaptation en fonction des besoins en lubrifiant, qui eux-mêmes dépendent des modes de fonctionnement requis pour l'actionneur. En effet, les besoins en lubrifiant, d'une part, et la manière dont le lubrifiant est distribué sur les pièces, d'autre part, dépendent grandement des conditions de fonctionnement de l'actionneur avec des courses de plus ou moins grande amplitude selon les applications. Pour certaines applications, les conditions de fonctionnement d'un même actionneur peuvent éventuellement être très variables dans le temps : à titre d'exemple, les actionneurs d'entraînement de volets mobiles des ailes d'un avion travaillent avec des courses longues lors du décollage et de l'atterrissage alors que les volets ont des déplacements de grande amplitude, tandis qu'ils ne travaillent pas, ou ne travaillent que peu avec des courses très courtes correspondant à des déplacements angulaires très faibles (quelques degrés), en vol stabilisé alors que les volets demeurent immobiles ou quasi immobiles.

Dans ces conditions, la souplesse d'aménagement autorisée par la mise en oeuvre de l'invention permet de concevoir un aménagement selon les conditions de fonctionnement normalement prévues pour l'actionneur.

C'est ainsi que l'on peut faire en sorte que les moyens de distribution capillaire d'un lubrifiant liquide soient prévus pour distribuer le lubrifiant au niveau d'une seule zone de contact d'au moins un rouleau satellite avec la tige centrale et avec la bague externe, ladite zone étant de préférence située centralement, lorsque l'actionneur est appelé à avoir essentiellement des déplacements de grandes amplitudes conduisant à une lubrification complète et régulière des parties appelées à être en contact.

Cependant, dans un mode de réalisation intéressant propre à couvrir un grand nombre de conditions d'utilisation, on peut faire en sorte que les moyens de distribution capillaire d'un lubrifiant liquide soient prévus pour distribuer le lubrifiant au niveau d'au moins deux zones de contact d'au moins un rouleau satellite avec la tige centrale et avec la bague externe, lesdites deux zones étant situées respectivement au voisinage des deux extrémités dudit rouleau satellite. En particulier, il peut être envisagé, si les besoins en lubrifiant sont moindres, que les moyens de distribution capillaire d'un lubrifiant liquide soient prévus pour distribuer le lubrifiant au niveau d'une pluralité de zones de contact d'au moins un rouleau satellite avec la tige centrale et avec la bague externe, cette pluralité de zones de contact étant réparties, de préférence sensiblement régulièrement, sur sensiblement toute la longueur dudit rouleau satellite. De façon plus spécifique, dans le cas où les besoins en lubrifiant sont importants, il peut être envisagé que les moyens de distribution capillaire d'un lubrifiant liquide soient prévus pour distribuer le lubrifiant au niveau de toutes les zones de contact d'au moins un rouleau satellite avec la tige centrale et avec la bague externe.

Il est certes envisageable que les moyens de distribution capillaire d'un lubrifiant liquide soient associés fonctionnellement à un seul rouleau satellite si les conditions de lubrification ainsi obtenues sont en accord avec les conditions de fonctionnement de l'actionneur. Cependant, il semble que, au moins pour un grand nombre d'applications, il faille prévoir que les moyens de distribution capillaire d'un lubrifiant liquide soient associés fonctionnellement à plusieurs rouleaux satellites, notamment répartis symétriquement, voire, si les besoins en lubrifiant sont élevés, que lesdits moyens de distribution capillaire d'un lubrifiant liquide soient associés fonctionnellement à tous les rouleaux satellites.

La mise en oeuvre pratique des dispositions de l'invention peut conduire à plusieurs modes de réalisation possibles.

Ainsi, dans un premier mode de réalisation, on prévoit que les moyens de distribution capillaire d'un lubrifiant liquide soient incorporés à au moins un rouleau satellite. Il est certes alors envisageable, dans le cas d'un actionneur ayant des courses de grandes amplitudes en fonctionnement normal, qu'un seul rouleau satellite soit équipé desdits moyens de distribution capillaire d'un lubrifiant liquide. Cependant, il semble que, au moins pour une majorité d'applications desdits actionneurs, il faille envisager que les moyens de distribution capillaire d'un lubrifiant liquide soient incorporés à plusieurs rouleaux satellites, notamment répartis symétriquement, si les besoins en lubrifiant sont moindres ; voire il peut aussi s'avérer nécessaire que les moyens de distribution capillaire d'un lubrifiant liquide soient incorporés à tous les rouleaux satellites si les besoins en lubrifiant sont importants.

Dans un autre mode de réalisation intéressant, les moyens de distribution capillaire d'un lubrifiant liquide sont incorporés à au moins un rouleau auxiliaire disposé en contact avec au moins un rouleau satellite, en étant radialement extérieur à celui-ci, et en ce que des moyens de retenue élastiques sont prévus pour rappeler ledit rouleau auxiliaire sensiblement radialement vers l'intérieur au contact dudit rouleau satellite. Toutefois, une solution techniquement plus simple à mettre en oeuvre et plus efficace dans son résultat consiste en ce que le au moins un rouleau auxiliaire soit disposé en contact simultanément avec deux rouleaux satellites adjacents, en étant radialement extérieur à ceux-ci, et en ce que les moyens de retenue élastiques soient prévus pour rappeler ledit rouleau auxiliaire sensiblement radialement vers l'intérieur au contact des deux rouleaux satellites. Quelle que soit la configuration retenue, il peut certes être prévu un unique rouleau auxiliaire maintenu au contact d'un unique rouleau satellite si les conditions de lubrification ainsi obtenues satisfont les exigences en relation avec les modes de fonctionnement de l'actionneur. Cependant, il semble que dans une majorité d'applications, il faille prévoir plusieurs rouleaux auxiliaires, notamment répartis symétriquement, et, a fortiori si le besoin en lubrifiant est élevé, il peut être prévu, les rouleaux satellites étant en nombre pair, un rouleau auxiliaire fonctionnellement associé à chaque paire de rouleaux satellites. Il est également envisageable que les rouleaux satellites soient en nombre égal à celui des rouleaux auxiliaires, chacun des rouleaux auxiliaires étant fonctionnellement associé à une paire de rouleaux satellites, solution qui permet de stocker une quantité maximale de lubrifiant.

Plusieurs solutions techniques sont envisageables pour la réalisation concrète de ces dispositions, qui font appel à un agencement particulier des rouleaux et qui excluent le recours à un réservoir de lubrifiant externe aux rouleaux.

Selon un premier exemple de réalisation possible, les moyens de distribution capillaire d'un lubrifiant liquide comprennent un réservoir macroscopique prévu intérieurement à un rouleau, satellite et/ou auxiliaire, ledit réservoir comprenant au moins une cavité intérieure, notamment de forme allongée en particulier sensiblement coaxialement à l'axe dudit rouleau, et au moins un canal capillaire s'étendant à partir de ladite cavité et débouchant sur au moins un flanc de filetage dudit rouleau. Dans cet exemple, le rouleau, satellite et/ou auxiliaire, qui est agencé pour la distribution du lubrifiant est usiné de manière à présenter les susdits cavité(s) et canal ou canaux.

Selon un second exemple de réalisation possible, le rouleau, satellite et/ou auxiliaire, est constitué en un matériau très poreux et les moyens de distribution capillaire d'un lubrifiant liquide comprennent un réservoir capillaire formé par les porosités dudit matériau très poreux constitutif dudit rouleau. Dans ce cas, la constitution du réservoir de lubrifiant est inhérente à la constitution même du rouleau.

Quel que soit l'exemple de réalisation retenu, la structure de l'ensemble demeure compacte en raison de l'intégration de la réserve de lubrifiant dans le rouleau concerné.

Le choix de l'huile reste du savoir faire en usage pour les vis à rouleaux satellites, et n'est pas affecté par l'invention, si ce n'est que sa viscosité doit être en adéquation avec la taille des cavité(s) et canal ou canaux pour bénéficier de l'effet de capillarité. De préférence, si le besoin fonctionnel nécessite l'emploi d'additif au lubrifiant, celui ci est une huile à additif dilué qui, d'une part, écarte les inconvénients des additifs en suspension dans un liquide et des particules libérées par les lubrifiants solides (risques de grippage) et qui, d'autre part, autorise le stockage et le transport du lubrifiant par capillarité sans risque qu'il soit dénaturé. En outre, un tel lubrifiant à additif dilué se prête tout particulièrement à pouvoir être distribué de façon très ponctuelle à l'emplacement précis souhaité, en l'occurrence sur les flancs de filet aux interfaces entre la vis du ou des rouleaux satellites et la vis de la tige centrale, d'une part, et entre la vis du ou des rouleaux satellites et la vis de la bague externe, d'autre part. Cependant, il n'est pas exclu que, dans le contexte de l'invention, on puisse faire appel à des lubrifiants avec additifs en suspension si cela s'avère nécessaire ou utile, les particules d'additif en suspension devant alors être de taille sensiblement moindre que la dimension des cavités ou canaux capillaires.

Le recours à la capillarité se prête remarquablement bien à une distribution précise, avec en supplément l'avantage tout aussi remarquable et essentiel dans le contexte envisagé que le lubrifiant est dispensé uniquement lorsque cela est nécessaire, l'ensemble de ces dispositions conduisant à une distribution économique propre à assurer une lubrification sur une très longue durée.

L'ensemble de ces particularités conduit à la réalisation d'un actionneur rotolinéaire, notamment de type réversible, à rouleaux satellites qui est lubrifié pour une durée très longue qui, dans le contexte d'applications spécifiques, doit pouvoir atteindre plusieurs dizaines d'années.

L'invention sera mieux comprise à la lecture de la description détaillée qui suit de certains modes de réalisation donnés uniquement à titre d'exemples nullement limitatifs. Dans cette description, on se réfère aux dessins annexés sur lesquels :
- les figures 1A à 1C sont des vues en perspective avec arrachement partiel d'un actionneur rotolinéaire à rouleaux satellites sur lesquelles ont été mises en évidence un aspect fondamental des dispositions de l'invention respectivement dans trois exemples de configurations différentes ;
- les figures 2A à 2C sont des vues simplifiées en coupe transversale de l'actionneur des figures 1A à 1C sur lesquelles ont été mises en évidence un autre aspect fondamental des dispositions de l'invention respectivement dans trois exemples de configurations différentes, ces figures illustrant en outre sous forme simplifiée trois variantes d'un premier mode de réalisation des dispositions de l'invention ;

- les figures 3A à 3E illustrent sous forme simplifiée diverses variantes d'un second mode de réalisation des dispositions de l'invention ;
- les figures 4A à 4C illustrent sous forme simplifiée des exemples pratiques de réalisation de moyens de retenue des rouleaux auxiliaires dans le cas concret de la variante de la figure 3E, les figures 4B et 4C étant respectivement deux coupes transversales (la bague externe étant omise) faites selon les lignes B-B et C-C, respectivement, de la figure 7 ;
- les figures 5A à 5C illustrent sous forme simplifiée trois variantes d'un premier mode de réalisation d'un rouleau utilisable dans un actionneur à rouleaux satellites pour dispenser un lubrifiant liquide conformément à l'invention ;
- les figures 6A et 6B illustrent sous forme simplifiée deux variantes d'un second mode de réalisation d'un rouleau utilisable dans un actionneur à rouleaux satellites pour dispenser un lubrifiant liquide conformément à l'invention ; et
- la figure 7 montre, regroupées en une seule représentation, deux vues en coupes diamétrales illustrant respectivement deux variantes (respectivement sur les parties droite et gauche de la représentation) d'un exemple concret de réalisation d'un actionneur rotolinéaire (bague externe enlevée) agencé conformément à l'invention avec combinaison des dispositions des figures 3E, 5A, 4B (pour la partie droite) et 4C (pour la partie gauche).

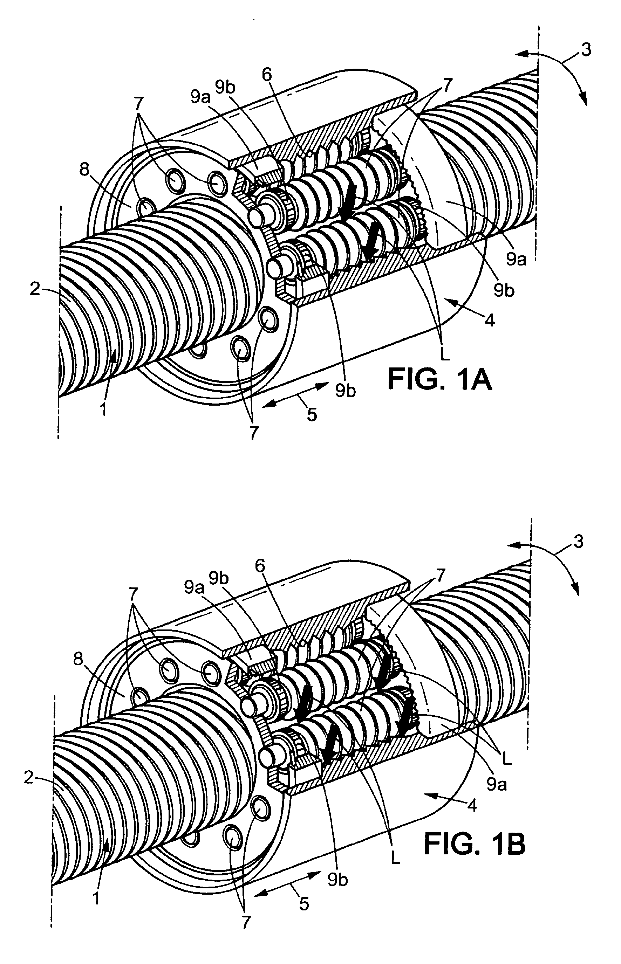

A la figure 1A à laquelle on se réfère tout d'abord, il est représenté, en perspective et avec arrachement partiel, un actionneur rotolinéaire, notamment réversible, du type visé par l'invention. On rappellera brièvement qu'un tel actionneur comporte :
- une tige 1 centrale ayant une face extérieure 2 filetée ;
- une bague 4 externe entourant sensiblement coaxialement ladite tige 1 centrale et possédant une face intérieure 6 filetée ; et
- une pluralité de rouleaux satellites 7 filetés répartis circonférentiellement entre ladite face extérieure 2 de la tige 1 centrale et ladite face intérieure 6 de la bague 4 externe ; les rouleaux satellites 7 sont en prise avec les faces 2, 6 filetées respectivement de la tige 1 centrale et de la bague 4 externe, et les filets de la face extérieure 2, de la face intérieure 6 et des rouleaux ont le même pas et la même inclinaison.

Les rouleaux satellites 7 sont retenus dans une cage formée par deux flasques 8 annulaires, entourant la tige 1 centrale et écartés axialement l'un de l'autre ; ces flasques sont percés de trous répartis angulairement formant des paliers dans lesquels tourillonnent les extrémités respectives des rouleaux satellites 7.

Contre au moins un des flasques 8 est prévue une couronne 9a annulaire, dentée sur sa face tournée vers l'intérieur, qui forme une crémaillère annulaire avec laquelle engrènent des pignons 9b prévus à l'extrémité correspondante des rouleaux satellites 7 ; dans l'exemple illustré, il est prévu deux couronnes 9a dentées avec lesquelles engrènent deux pignons 9b prévus respectivement aux deux extrémités de chacun des rouleaux satellites 7.

Dans l'exemple illustré à la figure 1A, on a supposé l'actionneur agencé classiquement avec la tige 1 centrale bloquée axialement, mais rotative (double flèche 3) en étant entraînée en rotation par des moyens non représentés, et avec la bague 4 externe bloquée en rotation, mais apte à coulisser axialement (double flèche 5) sous l'action d'entraînement de la tige 1 rotative ; l'actionneur étant plus spécialement supposé réversible, un effort mécanique exercé sur la bague 4 approximativement parallèlement à l'axe de l'actionneur provoque la mise en rotation de la tige 1 centrale. Mais un agencement inversé de l'actionneur (bague 4 entraînée en rotation et tige 1 centrale coulissante axialement) est également envisageable dans le contexte de la mise en oeuvre de l'invention.

Conformément à l'invention, on prévoit que l'actionneur comporte des moyens de distribution capillaire d'un lubrifiant liquide qui sont associés fonctionnellement à au moins un rouleau satellite 7 pour une distribution capillaire d'un lubrifiant L liquide au niveau d'au moins une zone de contact dudit au moins un rouleau satellite 7 avec la tige 1 centrale (non visible sur la figure 1A) et avec la bague 4 externe comme schématisé par les deux flèches L à la figure 1A.

Le lubrifiant liquide distribué sous forme capillaire est dispensé en quantité juste suffisante et avec précision uniquement aux emplacements de contact des pièces coopérantes : rouleau satellite 7 et tige 1 centrale, d'une part, et rouleau satellite 7 et bague 4 externe, d'autre part. Une telle distribution est donc économique et une réserve de lubrifiant liquide même de petit volume peut suffire pour assurer la lubrification requise sur une très longue durée pouvant couvrir la durée de vie prévue pour l'actionneur (par exemple quelques dizaines d'années pour des actionneurs de commande de vol d'aéronefs).

Dans le cas d'actionneurs ayant régulièrement des courses de déplacement longues, notamment maximales ou quasi maximales, il est possible de n'envisager la distribution capillaire de lubrifiant liquide qu'en une seule zone de contact du rouleau satellite 7 avec respectivement la tige 1 centrale et avec la bague 4 externe comme c'est le cas illustré schématiquement à la figure 1A, le lubrifiant étant réparti de façon approximativement homogène sur toute la longueur des surfaces coopérantes lors des mouvements relatifs des pièces.

Par contre, si l'actionneur n'a pas, régulièrement, des courses longues, notamment maximales, il est souhaitable de répartir le lubrifiant de façon approximativement homogène sur toute la longueur des surfaces coopérantes en multipliant les points de distribution. Ainsi, on peut faire en sorte que les moyens de distribution capillaire d'un lubrifiant liquide soient prévus pour distribuer le lubrifiant au niveau d'au moins deux zones de contact d'au moins un rouleau satellite 7 avec respectivement la tige 1 centrale et avec la bague 4 externe, lesdites deux zones étant situées respectivement au voisinage des deux extrémités du rouleau satellite 7 comme schématisé à la figure 1B par les deux flèches L (la figure 1B étant pour le reste identique à la figure 1A et les mêmes références numériques y désignant les mêmes éléments).

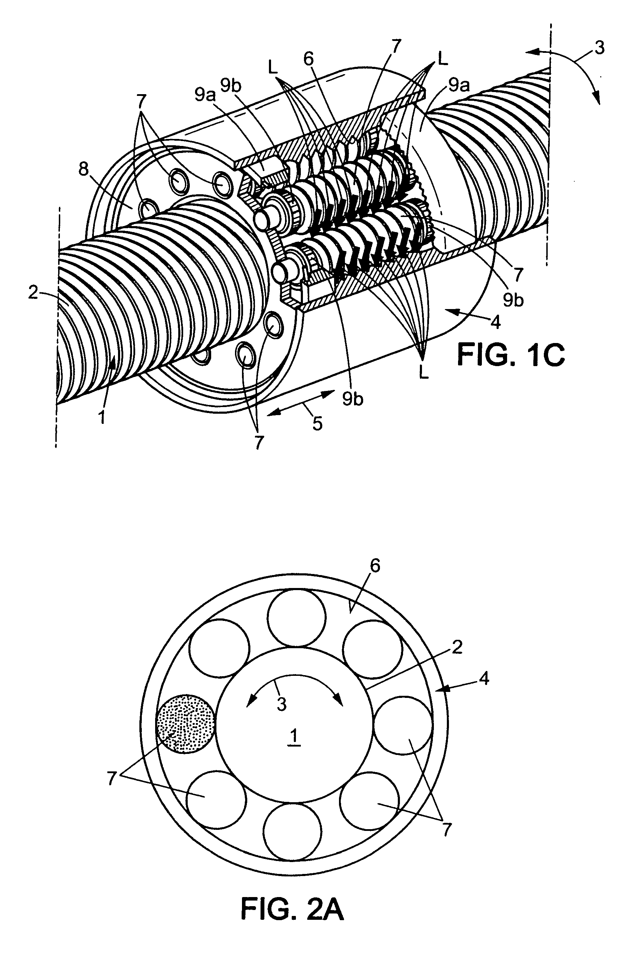

Dans le cas où une lubrification encore plus régulière est souhaitée, par exemple pour compenser une insuffisance d'entraînement de lubrifiant due à des mouvements de faibles amplitudes de l'actionneur et/ou à des charges élevées, il est préférable que les moyens de distribution capillaire d'un lubrifiant liquide soient prévus pour distribuer le lubrifiant au niveau d'une pluralité de zones de contact d'au moins un rouleau satellite 7 respectivement avec la tige 1 centrale et avec la bague 4 externe ; cette pluralité de zones de contact est répartie, de préférence régulièrement, sur sensiblement toute la longueur du rouleau satellite 7 comme schématisé à la figure 1C par la pluralité de flèches L (la figure 1C étant pour le reste identique à la figure 1A et les mêmes références numériques y désignant les mêmes éléments). Bien entendu, en cas de besoin, on peut envisager que ce soit avec toutes les zones de contact d'au moins un rouleau satellite 7 respectivement avec la tige 1 centrale et avec la bague 4 externe que les moyens de distribution capillaire d'un lubrifiant liquide soient agencés pour distribuer le lubrifiant liquide.

Des exemples concrets de réalisation de moyens de distribution tels que mentionnés dans les diverses configurations indiquées ci-dessus seront donnés plus loin.

Le problème d'une lubrification suffisante et homogène se pose non seulement en regard de la longueur de contact des rouleaux satellites 7 respectivement avec la tige 1 centrale et de la bague 4 externe, mais aussi en regard du développement annulaire de la surface externe 2 de la tige 1 centrale et de la surface interne 6 de la bague 4 externe, sachant que dans certaines conditions de fonctionnement les déplacements de l'actionneur peuvent ne pas s'étendre sur un tour complet de rotation, voire peuvent ne pas dépasser quelques degrés d'amplitude angulaire. Aussi, il est tout à fait souhaitable de concevoir l'actionneur, du point de vue précité, en relation avec les modes de fonctionnement auxquels il est destiné.

Comme illustré très schématiquement à la figure 2A, les moyens de distribution capillaire d'un lubrifiant liquide peuvent être associés fonctionnellement à un seul rouleau satellite 7 (représenté en grisé) si la capacité d'entraînement du lubrifiant en cours de fonctionnement de l'actionneur est suffisante (par exemple, courses maximales régulières).

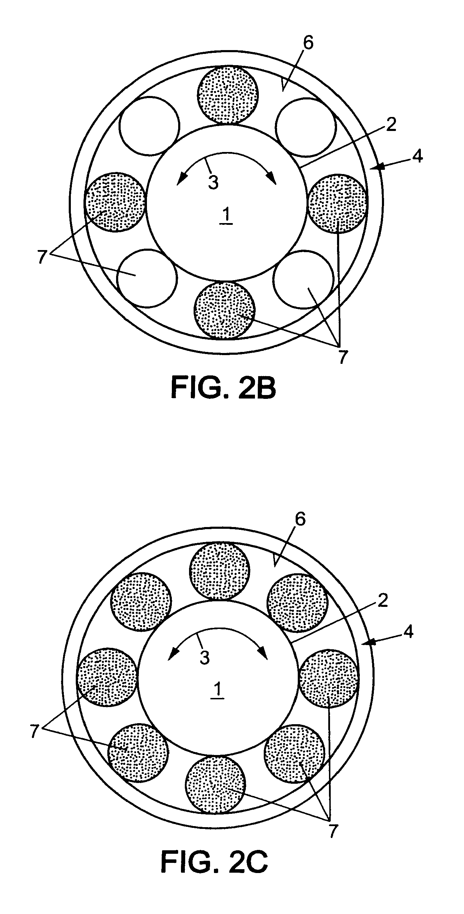

Si une telle disposition doit se révéler insuffisante pour assurer une lubrification correcte, il est parfaitement envisageable que les moyens de distribution capillaire d'un lubrifiant liquide soient associés fonctionnellement à plusieurs rouleaux satellites 7 (représentés en grisé), notamment répartis symétriquement, comme illustré très schématiquement à la figure 2B pour une configuration de quatre rouleaux satellites deux à deux diamétralement opposés parmi un ensemble de huit rouleaux satellites 7.

En cas de nécessité, il est parfaitement envisageable que les moyens de distribution capillaire d'un lubrifiant liquide soient associés fonctionnellement avec tous les rouleaux satellites 7 (représentés en grisé), comme illustré très schématiquement à la figure 2C.

Dans le contexte de l'agencement qui vient d'être décrit, on peut prévoir divers exemples de réalisation.

Un premier exemple de réalisation peut consister en ce que les moyens de distribution capillaire d'un lubrifiant liquide soient incorporés à au moins un rouleau satellite 7, autrement dit que ce soit le ou chaque rouleau satellite 7 qui soit agencé pour dispenser le lubrifiant liquide. Des exemples de tels agencements seront donnés plus loin. Ainsi, si cela s'avère suffisant dans le contexte de certaines conditions de fonctionnement de l'actionneur, un seul rouleau satellite 7 est agencé pour dispenser le lubrifiant liquide (la représentation de la figure 2A peut également être considérée comme illustrant cet exemple de réalisation). Par contre, si une lubrification plus importante et mieux répartie est requise, on peut prévoir que les moyens de distribution capillaire d'un lubrifiant liquide soient incorporés à plusieurs rouleaux satellites 7, notamment répartis symétriquement (la représentation de la figure 2B peut également être considérée comme illustrant cet exemple de réalisation), voire si nécessaire que les moyens de distribution capillaire d'un lubrifiant liquide soient incorporés à tous les rouleaux satellites 7 (la représentation de la figure 2C peut également être considérée comme illustrant cet exemple de réalisation).

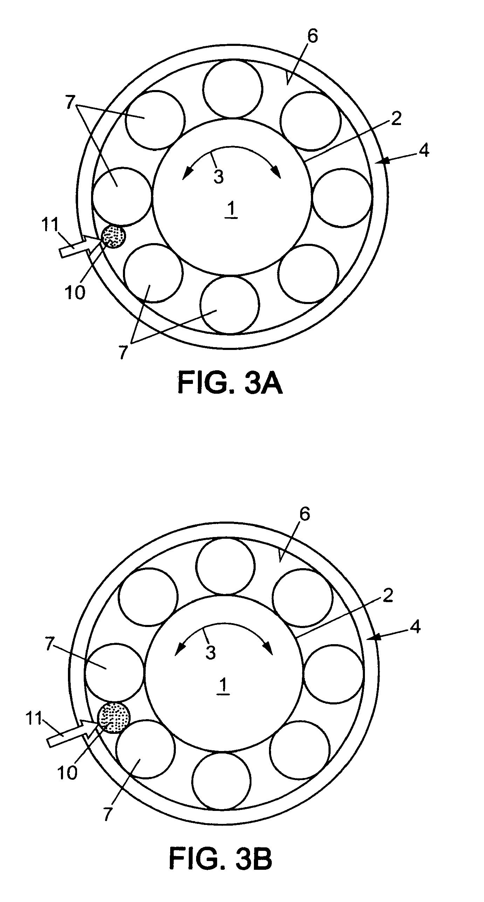

Dans un second exemple de réalisation, on prévoit, comme illustré très schématiquement à la figure 3A, que les moyens de distribution capillaire d'un lubrifiant liquide soient incorporés à au moins un rouleau auxiliaire 10 en contact avec au moins un rouleau satellite 7, en étant disposé radialement extérieurement à celui-ci. Des moyens 11 de retenue élastique (schématisé ici par une flèche dirigée sensiblement radialement vers le centre) sont prévus pour rappeler ledit rouleau auxiliaire 10 sensiblement radialement vers l'intérieur au contact dudit rouleau satellite 7. Il doit être souligné que l'effort de rappel dû aux moyens 11 doit être tout juste suffisant pour que le rouleau auxiliaire 10 demeure au contact du ou des rouleaux satellites avec le(s)quel(s) il coopère et que le rouleau auxiliaire 10 ne doit pas être appuyé avec effort contre le ou les rouleaux satellites coopérants afin de ne pas engendrer de frottement ni d'effort résistant additionnel. Un tel agencement procure un rattrapage de jeu automatique et permet de maintenir le rouleau auxiliaire au contact du ou des rouleau(x) satellite(s) coopérant(s) quel que soit le degré d'usure de ceux-ci.

Pour les mêmes raisons que celles exposées plus haut, on pourra avoir recours à un seul rouleau auxiliaire 10 si un tel agencement suffit au résultat recherché comme montré à la figure 3A sur laquelle le rouleau auxiliaire 10 est en contact avec un seul rouleau satellite 7.

Cependant, il est préférable d'avoir recours à un agencement qui est mieux équilibré du point de vue de la répartition des efforts et qui reste simple à mettre en oeuvre. Dans cet agencement montré très schématiquement à la figure 3B, le (ou chaque) rouleau auxiliaire 10 est en contact simultanément avec deux rouleaux satellites 7 adjacents, en étant disposé radialement extérieurement à ceux-ci, et les moyens 11 de retenue élastiques sont prévus pour rappeler ledit rouleau auxiliaire 10 sensiblement radialement vers l'intérieur au contact des deux rouleaux satellites 7 adjacents.

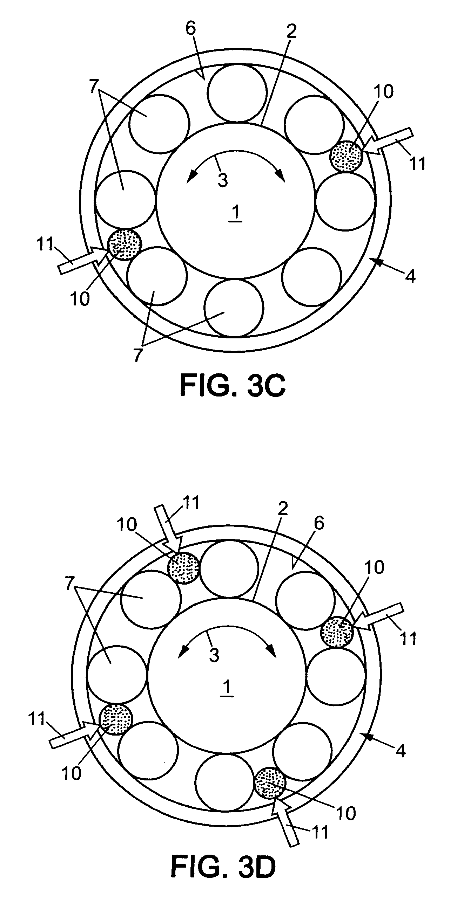

Si la lubrification obtenue avec un seul rouleau auxiliaire s'avère insuffisante, on prévoit alors plusieurs rouleaux auxiliaires 10, notamment répartis symétriquement. Cet agencement est illustré très schématiquement, dans le contexte où chaque rouleau auxiliaire est en contact avec deux rouleaux satellites 7 adjacents, à la figure 3C avec une configuration à deux rouleaux satellites 10 sensiblement diamétralement opposés et à la figure 3D avec une configuration à quatre rouleaux satellites 10 sensiblement diamétralement opposés deux à deux.

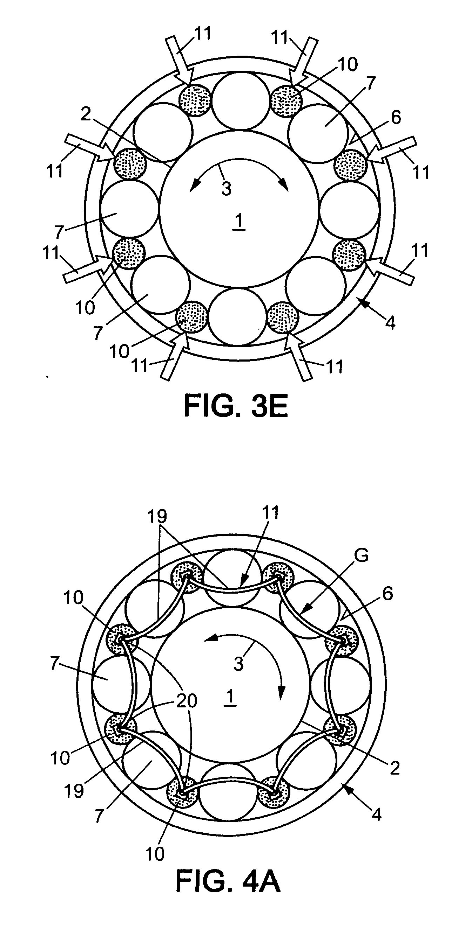

Dans un exemple de réalisation préféré, les rouleaux satellites 7 sont en nombre pair et il est prévu un rouleau auxiliaire 10 fonctionnellement associé à chaque paire de rouleaux satellites 7. Ainsi, une première possibilité peut consister en ce que chaque rouleau satellite 7 soit en contact avec un seul rouleau auxiliaire 10 (autrement dit, un rouleau auxiliaire 10 n'est disposé que dans un intervalle sur deux entre rouleaux satellites 7) comme illustré à la figure 3D - ce qui conduit à un nombre de rouleaux auxiliaires 10 moitié moindre que celui des rouleaux satellites 7-. Une autre possibilité peut consister, si cela s'avère nécessaire pour obtenir une lubrification plus importante, en ce qu'un rouleau auxiliaire 10 soit disposé dans chaque intervalle entre deux rouleaux satellites 7 adjacents, chaque rouleau satellite 7 étant lubrifié par deux rouleaux auxiliaires 10 l'encadrant (autrement dit, les rouleaux satellites 7 et les rouleaux auxiliaires 10 sont en nombres égaux) comme illustré à la figure 3E : la quantité de lubrifiant stockée est alors maximale.

Pour fixer les idées, on a représenté à la figure 4A un exemple de réalisation possible des moyens 11 de retenue élastique évoqués plus haut, mis en oeuvre dans la configuration montrée à la figure 3E. Les moyens 11 sont ici constitués, aux deux extrémités des rouleaux auxiliaires 10, par un ensemble de bras 19 incurvés, constitués en un matériau élastiquement déformable, qui réunit des flasques 20 percés dans lesquels tourillonnent les extrémités des axes des rouleaux auxiliaires 10. L'ensemble se présente ainsi sous l'aspect général d'une guirlande G élastiquement déformable qui tend à rappeler chaque rouleau auxiliaire 10 au contact des deux rouleaux satellites 7 avec lesquels il coopère.

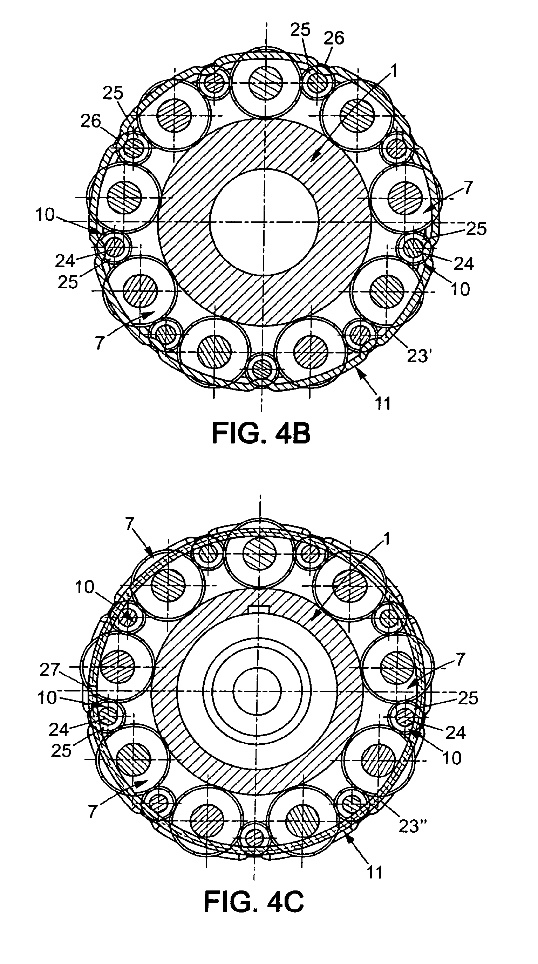

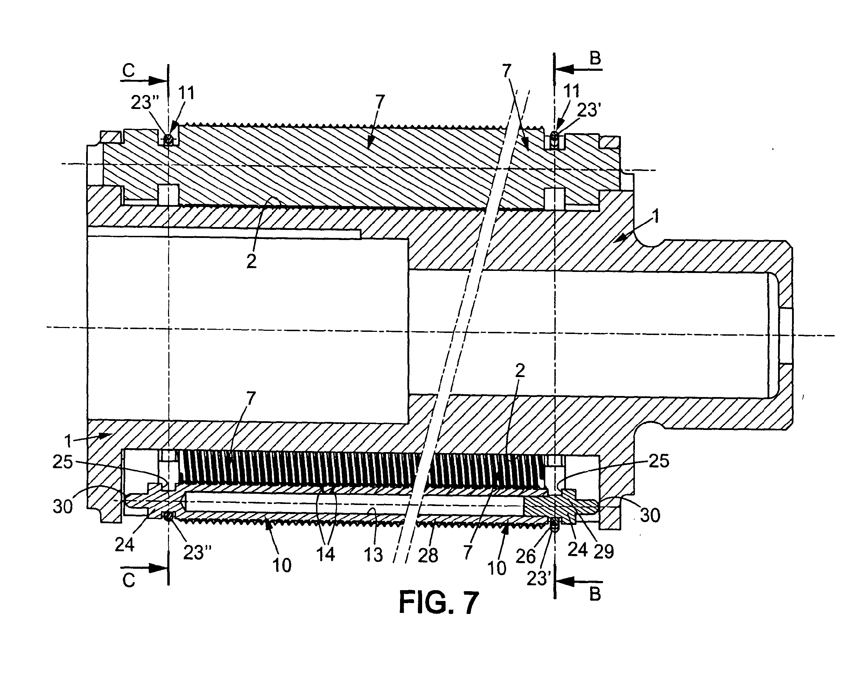

A la figure 4B et à la figure 7 (partie droite) est représenté un agencement simple et peu coûteux à réaliser et à mettre en oeuvre selon lequel les moyens 11 de retenue élastique comprennent au moins une bague 23' (en pratique deux bagues 23' disposées aux deux extrémités de l'actionneur), de forme générale sensiblement circulaire, qui est élastiquement déformable notamment radialement et qui entoure l'ensemble des extrémités 24 des rouleaux 10 auxiliaires en étant en appui élastique contre celles-ci. Pour retenir la bague 23', les extrémités 24 des rouleaux 10 auxiliaires sont munies d'une gorge 25 annulaire dans laquelle est engagée la bague 23'. L'élasticité de la bague 23' peut résulter de l'élasticité naturelle de son matériau constitutif, et/ou d'une forme spécifique facilitant la déformation, notamment radiale, de la bague. A titre d'exemple, la bague 23' illustrée aux figures 4B et 7 (partie droite) est pourvue d'empreintes creuses 26 à convexité tournée radialement vers l'intérieur, le nombre de ces empreintes creuses 26 étant égal au nombre des rouleaux 10 auxiliaires et chaque empreinte creuse 26 étant en appui, par sa face convexe, contre le fond d'une gorge 25 d'une extrémité 24 d'un rouleau 10 auxiliaire.

A la figure 4C et à la figure 7 (partie gauche) est représenté un agencement voisin de celui qui vient d'être exposé en regard des figures 4B et 7 (partie droite) et qui fait également appel à une bague (en pratique deux bagues disposées aux deux extrémités de l'actionneur) qui entoure l'ensemble des extrémités 24 des rouleaux 10 auxiliaires en étant en appui élastique contre celles-ci, à ceci près qu'ici la bague 23", qui peut être de forme sensiblement circulaire, est une bague fendue, la fente 27 étant visible sur la figure 4C.

D'après les explications qui précèdent, on aura compris que la fonction de tenue en réserve et de distribution du lubrifiant liquide peut être dévolue à un ou plusieurs rouleaux satellites 7 et/ou à un ou plusieurs rouleaux auxiliaires 10, une combinaison de rouleaux satellites spécifiquement adaptés et de rouleaux auxiliaires spécifiquement adaptés pouvant être envisagée.

Pour qu'il soit propre à assumer ces fonctions, le rouleau en question, satellite et/ou auxiliaire, peut être agencé selon l'une des deux solutions techniques suivantes.

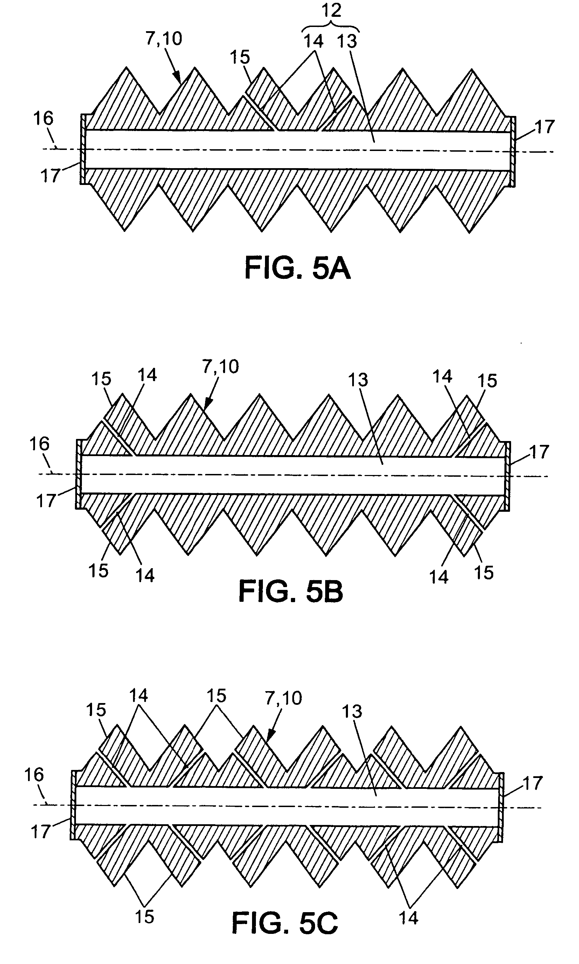

Selon la première solution proposée, le rouleau 4 et/ou 10 est aménagé de manière telle que les moyens de distribution capillaire d'un lubrifiant liquide comprennent un réservoir 12 macroscopique intérieur audit rouleau, comme illustré très schématiquement aux figures 5A à 5C. Ainsi, le réservoir 12 comprend au moins une cavité 13 intérieure, notamment de forme allongée parallèlement à l'axe 16 du rouleau et de préférence sensiblement coaxiale à l'axe 16 dudit rouleau 7, 10 ; en outre, le réservoir 12 comprend au moins un canal 14 capillaire qui s'étend, notamment de façon approximativement transversale à l'axe 16, à partir de ladite cavité 13 et débouche sur au moins un flanc 15 de filetage du rouleau. De façon pratique, la cavité 13 est obtenue en évidant centralement le rouleau 7, 10 sur toute sa longueur et de préférence coaxialement à son axe 16, puis en fermant l'extrémité ou les deux extrémités par des bouchons 17, comme montré aux figures 5A à 5C.

Le nombre et la localisation du ou des canaux 14 capillaires sont déterminés en relation avec les modalités retenues pour la distribution du lubrifiant liquide. Dans l'hypothèse où le pas du filetage nécessite plusieurs filets, il faudra préférentiellement prévoir autant de canaux que de filets.

Pour une distribution de lubrifiant dans une zone centrale du rouleau comme suggéré plus haut en relation avec la figure 1A, un ou plusieurs canaux 14 capillaires sont prévus vers le milieu du rouleau comme montré schématiquement à la figure 5A ; dans cet exemple, il est prévu deux canaux 14 capillaires orientés pour déboucher sur deux flancs 15 tournés à l'opposé l'un de l'autre de manière à lubrifier les deux flancs de filet en vis-à-vis de la tige 1 centrale et les deux flancs de filet en vis-à-vis de la bague 4 externe.

A la figure 7 est montré, en coupe diamétrale, un exemple concret d'actionneur agencé de la manière qui vient d'être exposée en référence à la figure 5A, et avec combinaison des dispositions décrites en référence aux figures 3E, 4B (partie de droite) et 4C (partie de gauche), étant souligné que seuls sont représentés la tige 1 centrale, les rouleaux 7 satellites, les rouleaux 10 auxiliaires, et les deux bagues élastiques 23' (dans la partie droite) et 23" (dans la partie gauche) tandis que la bague 4 externe n'est pas représentée pour laisser voir les organes sous-jacents ci-dessus. Comme visible sur la figure 7, chaque rouleau 10 auxiliaire est formé par un tronçon 28 métallique évidé centralement par la susdite cavité 13 coaxiale percée à partir d'une extrémité (extrémité de droite sur le dessin), l'autre extrémité étant borgne. Les deux canaux 14 capillaires sont disposés approximativement en position centrale. L'extrémité 24 qui est borgne (à gauche sur le dessin) est munie de la gorge 25 annulaire précitée dans laquelle est engagée la bague élastique (bague fendue 23" dans cet exemple de représentation). L'extrémité opposée à partir de laquelle a été usinée la cavité 13 est fermée par un bouchon 29 qui forme l'autre extrémité 24 précitée et qui est configuré (soit seul, soit en conjonction avec le bout du tronçon 28) pour définir la susdite gorge 25 dans laquelle est engagée la bague élastique (23' dans cet exemple de représentation).

Dans l'exemple de la figure 5B, un canal 14 capillaire ou plusieurs canaux 14 capillaires (ici deux canaux 14 capillaires débouchant sur des flancs de filet tournés à l'opposé l'un de l'autre) sont prévus à chaque extrémité du rouleau 7, 10 de manière à procurer une lubrification à partir des deux extrémités dudit rouleau comme suggéré plus haut en relation avec la figure 1B. Pour une distribution importante et régulière de lubrifiant sur toute la longueur du rouleau 7, 10 comme suggéré plus haut en relation avec la figure 1C, on peut prévoir une pluralité de canaux 14 capillaires répartis tout au long du rouleau 7, 10 et de préférence disposés de manière à déboucher sur plusieurs flancs 15 de filet opposés les uns aux autres comme montré à la figure 5C, voire à déboucher sur tous les flancs de filet du rouleau.

Bien entendu, il est parfaitement envisageable que tous les canaux 14 capillaires ne soient pas disposés dans un seul plan diamétral comme pourraient le laisser penser les représentations des figures 5A à 5C, mais sont mutuellement décalés angulairement de manière à déboucher sur les flancs 15 de filet dans toutes les directions transversales autour de l'axe 16.

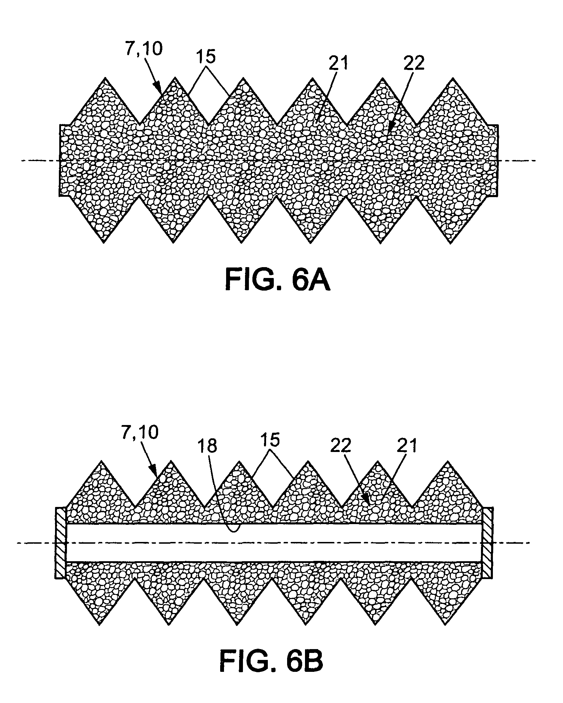

Selon la seconde solution proposée, le rouleau 4 et/ou 10 est aménagé de manière telle que les moyens de distribution capillaire d'un lubrifiant liquide comprennent un réservoir 22 capillaire intérieur au rouleau et formé par l'ensemble des porosités d'un matériau 21 très poreux à porosités ouvertes qui est constitutif dudit rouleau ou d'au moins une partie superficielle dudit rouleau. Autrement dit, c'est le rouleau 7, 10 lui-même qui, de par la nature poreuse de son matériau 21 constitutif, forme le réservoir 22 de lubrifiant liquide comme illustré très schématiquement à la figure 6A et le lubrifiant est alors distribué à partir des microcavités ouvertes en surface. Un tel agencement convient pour une délivrance continue et régulière de lubrifiant liquide sur toute la longueur du rouleau.

Il faut cependant noter que, si les efforts devant être transmis par l'actionneur sont élevés, la réalisation d'un ou plusieurs rouleaux satellites en un tel matériau poreux est peu appropriée en raison de la relativement faible résistance mécanique des matériaux poreux ; l'agencement proposé ci-dessus sera donc réservé a priori aux rouleaux auxiliaires 10, qui n'ont aucun effort à transmettre.

Des matériaux poreux appropriés pour une application de ce type sont déjà connus, par exemple pour constituer des cages poreuses pour des billes de roulements à billes.

Eventuellement, si la capacité de la réserve en lubrifiant liquide procurée par l'ensemble des porosités n'est pas suffisante, il est envisageable, comme illustré à la figure 6B, de pratiquer une cavité 18 intérieure, qui sert de réservoir principal à partir duquel le lubrifiant liquide peut migrer de porosité en porosité jusqu'aux flancs 15 de filet.

Pour une mise en oeuvre facile et fiable des dispositions conformes à l'invention, le lubrifiant utilisé doit posséder une viscosité compatible avec les dimensions des cavités ou des canaux capillaires de distribution, de manière que la distribution de ce lubrifiant puisse être réalisée par capillarité conformément à l'invention. De préférence dans ce contexte, le lubrifiant liquide peut être une huile à additif dilué (par exemple, mais non limitativement, le dithiocarbamate de molybdène) propre à être distribuée par capillarité, de telle manière que le lubrifiant ne contienne aucune particule solide susceptible de boucher les capillaires ou les porosités de distribution. Toutefois, si besoin en est, il sera également possible d'avoir recours à un lubrifiant contenant un additif solide sous forme de particules à la condition que la taille desdites particules soit sensiblement moindre que celle des cavités ou canaux capillaires afin qu'il ne résulte aucune obstruction de ceux-ci.

## Revendications

1. Actionneur rotolinéaire du type comportant :
une tige (1) centrale ayant une face extérieure (2) filetée,
une bague (4) externe entourant sensiblement coaxialement ladite tige (1) centrale et possédant une face intérieure (6) filetée, et
une pluralité de rouleaux satellites (7) filetés qui sont répartis circonférentiellement entre ladite face extérieure (2) de la tige (1) centrale et ladite face intérieure (6) de la bague (4) externe et qui sont en prise avec les faces filetées de la tige (1) centrale et de la bague (4) externe,
l'une de la tige (1) centrale ou de la bague (4) externe étant rotative et bloquée axialement tandis que l'autre respectivement de la bague (4) externe ou de la tige (1) centrale est bloquée en rotation et déplaçable axialement, **caractérisé en ce qu'**il comporte des moyens de distribution capillaire d'un lubrifiant (L) liquide qui sont associés fonctionnellement à au moins un rouleau satellite (7) pour une distribution capillaire dudit lubrifiant (L) liquide, à partir d'une réserve, et au niveau d'au moins une zone de contact dudit au moins un rouleau satellite (7) avec la tige (1) centrale et avec la bague (4) externe.

2. Actionneur selon la revendication 1, **caractérisé en ce que** les moyens de distribution capillaire dudit lubrifiant (L) liquide sont prévus pour distribuer le lubrifiant (L) au niveau d'une seule zone de contact d'au moins un rouleau satellite (7) avec la tige (1) centrale et avec la bague (4) externe.

3. Actionneur selon la revendication 1, **caractérisé en ce que** les moyens de distribution capillaire dudit lubrifiant (L) liquide sont prévus pour distribuer le lubrifiant (L) au niveau d'au moins deux zones de contact d'au moins un rouleau satellite (7) avec la tige (1) centrale et avec la bague (4) externe, lesdites deux zones étant situées respectivement au voisinage des deux extrémités dudit rouleau satellite (7).

4. Actionneur selon la revendication 1, **caractérisé en ce que** les moyens de distribution capillaire dudit lubrifiant (L) liquide sont prévus pour distribuer le lubrifiant (L) au niveau d'une pluralité de zones de contact d'au moins un rouleau satellite (7) avec la tige (1) centrale et avec la bague (4) externe, cette pluralité de zones de contact étant réparties sur sensiblement toute la longueur dudit rouleau satellite (7).

5. Actionneur selon la revendication 1, **caractérisé en ce que** les moyens de distribution capillaire dudit lubrifiant (L) liquide sont prévus pour distribuer le lubrifiant (L) au niveau de toutes les zones de contact d'au moins un rouleau satellite (7) avec la tige (1) centrale et avec la bague (4) externe.

6. Actionneur selon l'une quelconque des revendications 1 à 5, **caractérisé en ce que** les moyens de distribution capillaire dudit lubrifiant (L) liquide sont associés fonctionnellement à un seul rouleau satellite (7).

7. Actionneur selon l'une quelconque des revendications 1 à 5, **caractérisé en ce que** les moyens de distribution capillaire dudit lubrifiant (L) liquide sont associés fonctionnellement à plusieurs rouleaux satellites (7).

8. Actionneur selon l'une quelconque des revendications 1 à 5, **caractérisé en ce que** les moyens de distribution capillaire dudit lubrifiant (L) liquide sont associés fonctionnellement à tous les rouleaux satellites (7).

9. Actionneur selon l'une quelconque des revendications 1 à 8, **caractérisé en ce que** les moyens de distribution capillaire dudit lubrifiant (L) liquide sont incorporés à au moins un rouleau satellite (7).

10. Actionneur selon la revendication 9, **caractérisé en ce que** les moyens de distribution capillaire dudit lubrifiant (L) liquide sont incorporés à un seul rouleau satellite (7).

11. Actionneur selon la revendication 9, **caractérisé en ce que** les moyens de distribution capillaire d'un lubrifiant (L) liquide sont incorporés à plusieurs rouleaux satellites (7)répartis symétriquement.

12. Actionneur selon la revendication 9, **caractérisé en ce que** les moyens de distribution capillaire dudit lubrifiant (L) liquide sont incorporés à tous les rouleaux satellites (7).

13. Actionneur selon l'une quelconque des revendications 1 à 8, **caractérisé en ce que** les moyens de distribution capillaire dudit lubrifiant (L) liquide sont incorporés à au moins un rouleau auxiliaire (10) disposé en contact avec au moins un rouleau satellite (7), en étant radialement extérieur à celui-ci, et **en ce que** des moyens de retenue (11) élastiques sont prévus pour rappeler ledit rouleau auxiliaire (10) sensiblement radialement vers l'intérieur au contact dudit rouleau satellite (7).

14. Actionneur selon la revendication 13, **caractérisé en ce que** ledit au moins un rouleau auxiliaire (10) est disposé en contact simultanément avec deux rouleaux satellites (7) adjacents, en étant radialement extérieur à ceux-ci, et **en ce que** lesdits moyens de retenue (11) élastiques sont prévus pour rappeler ledit rouleau auxiliaire (10) sensiblement radialement vers l'intérieur au contact desdits deux rouleaux satellites (7).

15. Actionneur selon la revendication 13 ou 14, **caractérisé en ce qu'**il est prévu un seul rouleau auxiliaire (10).

16. Actionneur selon la revendication 13 ou 14, **caractérisé en ce qu'**il est prévu plusieurs rouleaux auxiliaires (10).

17. Actionneur selon la revendication 14, **caractérisé en ce que** lesdits rouleaux satellites (7) sont en nombre pair et **en ce qu'**il est prévu un rouleau auxiliaire (10) fonctionnellement associé à chaque paire de rouleaux satellites (7).

18. Actionneur selon la revendication 14, **caractérisé en ce que** lesdits rouleaux satellites (7) sont en nombre égal au nombre de rouleaux auxiliaires (10), chacun des rouleaux auxiliaires étant fonctionnellement associé à une paire respective de rouleaux satellites (7).

19. Actionneur selon l'une quelconque des revendications 1 à 18, **caractérisé en ce que** les moyens de distribution capillaire dudit lubrifiant (L) liquide comprennent un réservoir (12) macroscopique prévu intérieurement à un rouleau, satellite (7) et/ou auxiliaire (10), ledit réservoir (12) comprenant au moins une cavité (13) intérieure et au moins un canal (14) capillaire s'étendant à partir de ladite cavité (13) et débouchant sur au moins un flanc (15) de filetage dudit rouleau (7, 10).

20. Actionneur selon l'une quelconque des revendications 1 à 18, **caractérisé en ce que** au moins un rouleau, satellite (7) et/ou auxiliaire (10), est constitué en un matériau (21) poreux et **en ce que** les moyens de distribution capillaire dudit lubrifiant (L) liquide comprennent un réservoir (22) capillaire formé par les porosités dudit matériau (21) poreux constitutif dudit rouleau (7, 10).

21. Actionneur selon la revendication 20, **caractérisé en ce que** les moyens de distribution capillaire dudit lubrifiant (L) liquide comprennent en outre au moins une cavité (18) intérieure, de forme allongée dans ledit rouleau (7, 10).

22. Actionneur selon l'une quelconque des revendications 16 à 18, **caractérisé en ce que** lesdits moyens de retenue (11) élastiques prévus pour rappeler lesdits rouleaux auxiliaires (10) sensiblement radialement vers l'intérieur au contact desdits rouleaux satellites (7) comprennent au moins une bague élastique entourant l'ensemble des extrémités des rouleaux auxiliaires (10) et en appui élastique contre celles-ci.

23. Actionneur selon l'une quelconque des revendications 16 à 18, **caractérisé en ce que** lesdits moyens de retenue (11) élastiques prévus pour rappeler lesdits rouleaux auxiliaires (10) sensiblement radialement vers l'intérieur au contact desdits rouleaux satellites (7) comprennent au moins une bague élastique fendue entourant l'ensemble des extrémités des rouleaux auxiliaires (10) et en appui élastique contre celles-ci.

24. Actionneur selon l'une quelconque des revendications 1 à 23, **caractérisé en ce que** ledit lubrifiant (L) est une huile à additif dilué propre à être distribuée par capillarité.

25. Actionneur selon l'une quelconque des revendications 1 à 24, **caractérisé en ce que** la tige (1) centrale est rotative et bloquée axialement et **en ce que** la bague (4) externe est déplaçable axialement et bloquée en rotation.

26. Actionneur selon l'une quelconque des revendications 1 à 24, **caractérisé en ce que** la bague (4) externe est rotative et bloquée axialement et **en ce que** la tige (1) centrale est déplaçable axialement et bloquée en rotation.

## Claims

1. Rotolinear actuator of the type comprising: a central rod (1) having a threaded outer face (2),
an outer ring (4) surrounding substantially coaxially said central rod (1) and possessing a threaded inner face (6), and
a plurality of threaded satellite rollers (7) distributed circumferentially between said outer face (2) of the central rod (1) and said inner face (6) of the outer ring (4) and engaged with the threaded faces of the central rod (1) and the outer ring (4),
one of the central rod (1) and the outer ring (4) being capable of rotating and axially secured while the other respectively of the outer ring (4) and the central rod (1) is secured in rotation and capable of being axially displaced, **characterized in that** it comprises means for distribution by capillarity of a liquid lubricant (L) that are functionally associated with at least one satellite roller (7) for distribution by capillarity of said lubricant liquid (L), from a store, and at at least one contact area of said at least one satellite roller (7) with the central rod (1) and the outer ring (4),

2. Actuator according to claim 1, **characterized in that** the means for distribution by capillarity of said liquid lubricant (L) are provided in order to distribute the lubricant (L) at a single contact area, of at least one satellite roller (7) with the central rod (1) and the outer ring (4).

3. Actuator according to claim 1, **characterized in that** the means for distribution by capillarity of said liquid lubricant (L) are provided in order to distribute the lubricant (L) at at least two contact areas of at least one satellite roller (7) with the central rod (1) and the outer ring (4), said two areas being located respectively close to the two ends of said satellite roller (7).

4. Actuator according to claim 1, **characterized in that** the means for distribution by capillarity of said liquid lubricant (L) are provided in order to distribute the lubricant (L) at a plurality of contact areas of at least one satellite roller (7) with the central rod (1) and the outer ring (4), said plurality of contact areas being distributed substantially over the whole length of said satellite roller (7).

5. Actuator according to claim 1, **characterized in that** the means for distribution by capillarity of said liquid lubricant (L) are provided in order to distribute the lubricant (L) at all the contact areas of at least one satellite roller (7) with the central rod (1) and the outer ring (4).

6. Actuator according to any one of claims 1 to 5, **characterized in that** the means for distribution by capillarity of said liquid lubricant (L) are functionally associated with a single satellite roller (7).

7. Actuator according to any one of claims 1 to 5, **characterized in that** the means for distribution by capillarity of said liquid lubricant (L) are functionally associated with several satellite rollers (7).

8. Actuator according to any one of claims 1 to 5, **characterized in that** the means for distribution by capillarity of said liquid lubricant (L) are functionally associated with all the satellite rollers (7).

9. Actuator according to any one of claims 1 to 8, **characterized in that** the means for distribution by capillarity of said liquid lubricant (L) are incorporated into at least one satellite roller (7).

10. Actuator according to claim 9, **characterized in that** the means for distribution by capillarity of said liquid lubricant (L) are incorporated into a single satellite roller (7).

11. Actuator according to claim 9, **characterized in that** the means for distribution by capillarity of a liquid lubricant (L) are incorporated into several symmetrically distributed satellite rollers (7).

12. Actuator according to claim 9, **characterized in that** the means for distribution by capillarity of said liquid lubricant (L) are incorporated into all the satellite rollers (7).

13. Actuator according to any one of claims 1 to 8, **characterized in that** the means for distribution by capillarity of said liquid lubricant (L) are incorporated into at least one auxiliary roller (10) arranged in contact with at least one satellite roller (7), while being radially external to the latter, and **in that** flexible biasing means (11) are provided in order to bias said auxiliary roller (10) substantially radially inward in contact with said satellite roller (7).

14. Actuator according to claim 13, **characterized in that** the at least one auxiliary roller (10) is arranged in contact simultaneously with two adjacent satellite rollers (7), while being radially external thereto, and **in that** said flexible biasing means (11) are provided in order to bias said auxiliary roller (10) substantially radially inward in contact with said two satellite rollers (7).

15. Actuator according to claim 13 or 14, **characterized in that** a single auxiliary roller (10) is provided.

16. Actuator according to claim 13 or 14, **characterized in that** several auxiliary rollers (10) are provided.

17. Actuator according to claim 14, **characterized in that** said satellite rollers (7) are in even numbers and **in that** an auxiliary roller (10) functionally associated with each pair of satellite rollers (7) is provided.

18. Actuator according to claim 14, **characterized in that** said satellite rollers (7) are equal in number to the number of auxiliary rollers (10), each of the auxiliary rollers being functionally associated with a respective pair of satellite rollers (7).

19. Actuator according to any one of claims 1 to 18, **characterized in that** the means for distribution by capillarity of said liquid lubricant (L) comprise a macroscopic reservoir (12) provided within a satellite (7) and/or auxiliary (10) roller, said reservoir (12) comprising at least one inner cavity (13) and at least one capillary channel (14) extending from said cavity (13) and opening onto at least one thread flank (15) of said roller (7, 10),

20. Actuator according to any one of claims 1 to 18, **characterized in that** at least one satellite (7) and/or auxiliary (10) roller is constituted of a porous material (21) and **in that** the means for distribution by capillarity of said liquid lubricant (L) comprise a capillary reservoir (22) formed by the pores of said porous material (21) constituting said roller (7, 10).

21. Actuator according to claim 20, **characterized in that** the means for distribution by capillarity of said liquid lubricant (L) include moreover at least one inner cavity (18) having an elongated shape in said roller (7, 10).

22. Actuator according to any one of claims 16 to 18, **characterized in that** said flexible biasing means (11) provided in order to bias said auxiliary rollers (10) substantially radially inward in contact with said satellite rollers (7) comprise at least one flexible ring surrounding all of the ends of the auxiliary rollers (10) and pressing flexibly against them.

23. Actuator according to any one of claims 16 to 18, **characterized in that** said flexible biasing means (11) provided in order to bias said auxiliary rollers (10) substantially radially inward in contact with said satellite rollers (7) comprise at least one split flexible ring, surrounding all of the ends of the auxiliary rollers (10) and flexibly pressing against them.

24. Actuator according to any one of claims 1 to 23, **characterized in that** said lubricant (L) is an oil with a diluted additive suitable for being dispensed by capillarity.

25. Actuator according to any one of claims 1 to 24, **characterized in that** the central rod (1) is capable of rotating and axially secured and **in that** the outer ring (4) is capable of being axially displaced and secured in rotation.

26. Actuator according to any one of claims 1 to 24, **characterized in that** the outer ring (4) is capable of rotating and axially secured and **in that** the central rod (1) is capable of being axially displaced and secured in rotation.

## Patentansprüche

1. Rotolinearaktuator des Typs umfassend:
eine zentrale Stange ( 1 ) mit einer äußeren Gewindefläche (2),
eine externe Druckhülse (4), die die zentrale Stange (1) im Wesentlichen koaxial umschließt und die eine innere Gewindefläche (6) besitzt, und
eine Vielzahl von Gewinde-Satellitenwalzen (7), die umfangsartig zwischen der äußeren Fläche (2) der zentralen Stange (1) und der inneren Fläche (6) der externen Druckhülse (4) verteilt sind und die mit den Gewindeflächen der zentralen Stange (1) und der externen Druckhülse (4) in Eingriff stehen,
wobei die zentrale Stange (1) oder die externe Druckhülse (4) drehbar und axial arretiert ist, während das jeweils andere der externen Druckhülse (4) und der zentralen Stange (1) bezüglich einer Rotation arretiert und axial verschiebbar ist,
**dadurch gekennzeichnet,**
**dass** er Mittel zur kapillaren Verteilung eines flüssigen Schmiermittels (L) umfasst, die zu einer kapillaren Verteilung des flüssigen Schmiermittels (L) aus einem Vorrat funktionell mit mindestens einer Satellitenwalze (7) in Höhe mindestens einer Kontaktzone der mindestens einen Satellitenwalze (7) mit der zentralen Stange (1) und mit der externen Druckhülse (4) assoziiert sind.

2. Aktuator gemäß Anspruch 1, **dadurch gekennzeichnet, dass** die Mittel zur kapillaren Verteilung des flüssigen Schmiermittels (L) dazu vorgesehen sind, das Schmiermittel (L) in Höhe einer einzelnen Kontaktzone der mindestens einen Satellitenwalze (7) mit der zentralen Stange (1) und mit der externen Druckhülse (4) zu verteilen.

3. Aktuator gemäß Anspruch 1, **dadurch gekennzeichnet, dass** die Mittel zur kapillaren Verteilung des flüssigen Schmiermittels (L) dazu vorgesehen sind, das Schmiermittel (L) in Höhe mindestens zweier Kontaktzonen der mindestens einen Satellitenwalze (7) mit der zentralen Stange (1) und mit der externen Druckhülse (4) zu verteilen, wobei die zwei Zonen jeweils in der Umgebung der beiden Enden der Satellitenwalze (7) angeordnet sind.

4. Aktuator gemäß Anspruch 1, **dadurch gekennzeichnet, dass** die Mittel zur kapillaren Verteilung des flüssigen Schmiermittels (L) dazu vorgesehen sind, das Schmiermittel in Höhe einer Vielzahl von Kontaktzonen zwischen der mindestens einen Satellitenwalze (7) mit der zentralen Stange (1) und mit der externen Druckhülse (4) zu verteilen, wobei diese Vielzahl von Kontaktzonen im Wesentlichen über die gesamte Länge der Satellitenwalze (7) verteilt ist.

5. Aktuator gemäß Anspruch 1, **dadurch gekennzeichnet, dass** die Mittel zur kapillaren Verteilung des flüssigen Schmiermittels (L) dazu vorgesehen sind, das Schmiermittel (L) in Höhe sämtlicher Kontaktzonen der mindestens einen Satellitenwalze (7) mit der zentralen Stange (1) und mit der externen Druckhülse (4) zu verteilen.

6. Aktuator gemäß einem der Ansprüche 1 bis 5, **dadurch gekennzeichnet, dass** die Mittel zur kapillaren Verteilung des flüssigen Schmiermittels (L) funktionell mit einer einzigen Satellitenwalze (7) assoziiert sind.

7. Aktuator gemäß einem der Ansprüche 1 bis 5, **dadurch gekennzeichnet, dass** die Mittel zur kapillaren Verteilung des flüssigen Schmiermittels (L) funktionell mit einer Vielzahl von Satellitenwalzen (7) assoziiert sind.

8. Aktuator gemäß einem der Ansprüche 1 bis 5, **dadurch gekennzeichnet, dass** die Mittel zur kapillaren Verteilung des flüssigen Schmiermittels (L) funktionell mit sämtlichen Satellitenwalzen (7) assoziiert sind.

9. Aktuator gemäß einem der Ansprüche 1 bis 8, **dadurch gekennzeichnet, dass** die Mittel zur kapillaren Verteilung des flüssigen Schmiermittels (L) in zumindest eine Satellitenwalze (7) eingebaut sind.

10. Aktuator gemäß Anspruch 9, **dadurch gekennzeichnet, dass** die Mittel zur kapillaren Verteilung des flüssigen Schmiermittels (L) in eine einzige Satellitenwalze (7) eingebaut sind.

11. Aktuator gemäß Anspruch 9, **dadurch gekennzeichnet, dass** die Mittel zur kapillaren Verteilung des flüssigen Schmiermittels (L) in eine Vielzahl von symmetrisch verteilten Satellitenwalzen (7) eingebaut sind.

12. Aktuator gemäß Anspruch 9, **dadurch gekennzeichnet, dass** die Mittel zur kapillaren Verteilung des flüssigen Schmiermittels (L) in sämtliche Satellitenwalzen (7) eingebaut sind.

13. Aktuator gemäß einem der Ansprüche 1 bis 8, **dadurch gekennzeichnet, dass** die Mittel zur kapillaren Verteilung des flüssigen Schmiermittels (L) in zumindest eine Hilfswalze (10) eingebaut sind, die in Kontakt mit mindestens einer Satellitenwalze (7) angeordnet ist, wobei sie radial außerhalb dieser ist, und dass elastische Rückhaltemittel (11) dazu vorgesehen sind, die Hilfswalze (10) im Wesentlichen radial zum Inneren hin zum Kontakt mit der Satellitenwalze (7) zurückzuführen.

14. Aktuator gemäß Anspruch 13, **dadurch gekennzeichnet, dass** die mindestens eine Hilfswalze (10) in gleichzeitigem Kontakt mit zwei benachbarten Satellitenwalzen (7) angeordnet ist, wobei sie radial außerhalb dieser ist, und dass die elastischen Rückhaltemittel (11) dazu vorgesehen sind, die Hilfswalze (10) im Wesentlichen radial zum Inneren hin zum Kontakt mit den zwei Satellitenwalzen (7) zurückzuführen.

15. Aktuator gemäß Anspruch 13 oder 14, **dadurch gekennzeichnet, dass** eine einzelne Hilfswalze (10) vorgesehen ist.

16. Aktuator gemäß Anspruch 13 oder 14, **dadurch gekennzeichnet, dass** mehrere Hilfswalzen (10) vorgesehen sind.

17. Aktuator gemäß Anspruch 14, **dadurch gekennzeichnet, dass** die Satellitenwalzen (7) in gerader Anzahl vorliegen und dass eine Hilfswalze (10) funktionell mit jedem Paar von Satellitenwalzen (7) assoziiert ist.

18. Aktuator gemäß Anspruch 14, **dadurch gekennzeichnet, dass** die Satellitenwalzen (7) in gleicher Anzahl wie die Hilfswalzen (10) vorhanden sind, wobei jede Hilfswalze funktionell mit einem entsprechenden Paar von Satellitenwalzen (7) assoziiert ist.

19. Aktuator gemäß einem der Ansprüche 1 bis 18, **dadurch gekennzeichnet, dass** die Mittel zur kapillaren Verteilung des flüssigen Schmiermittels (L) ein makroskopisches Reservoir (12) umfassen, das innerhalb einer Satellitenwalze (7) und/oder einer Hilfswalze (10) vorgesehen ist, wobei das Reservoir (12) mindestens einen inneren Hohlraum (13) und mindestens einen Kapillarkanal (14) umfasst, der sich von dem Hohlraum (13) erstreckt und in mindestens eine Gewindeflanke (15) der Walze (7, 10) mündet.

20. Aktuator gemäß einem der Ansprüche 1 bis 18, **dadurch gekennzeichnet, dass** mindestens eine Satellitenwalze (7) und/oder Hilfswalze (10) aus einem porösen Material (21) aufgebaut ist und dass die Mittel zur kapillaren Verteilung des flüssigen Schmiermittels (L) ein Kapillarreservoir (22) umfassen, das durch die Porosität des porösen Materials (21), aus welchem diese Walze (7, 10) aufgebaut ist, gebildet wird.

21. Aktuator gemäß Anspruch 20, **dadurch gekennzeichnet, dass** die Mittel zur kapillaren Verteilung des flüssigen Schmiermittels (L) zusätzlich zumindest einen inneren Hohlraum (18) von länglicher Form in der Walze (7, 10) umfassen.

22. Aktuator gemäß einem der Ansprüche 16 bis 18, **dadurch gekennzeichnet, dass** die elastischen Rückhaltemittel (11), die dazu vorgesehen sind, die Hilfswalzen (10) im Wesentlichen radial zum Inneren hin zum Kontakt mit den Satellitenwalzen (7) zurückzuführen, mindestens eine elastische Druckhülse umfassen, die die Gesamtheit der Enden der Hilfswalzen (10) umschließt und sich elastisch gegen diese anlehnt.

23. Aktuator gemäß einem der Ansprüche 16 bis 18, **dadurch gekennzeichnet, dass** die elastischen Rückhaltemittel, die dazu vorgesehen sind, die Hilfswalzen (10) im Wesentlichen radial zum Inneren hin zum Kontakt mit den Satellitenwalzen (7) zurückzuführen, mindestens eine geschlitzte elastische Druckhülse umfassen, die die Gesamtheit der Enden der Hilfswalzen (10) umschließt und sich elastisch gegen diese anlehnt.

24. Aktuator gemäß einem der Ansprüche 1 bis 23, **dadurch gekennzeichnet, dass** das Schmiermittel (L) ein Öl mit einem verdünnten Additiv ist, das zur Verteilung mittels Kapillarität geeignet ist.

25. Aktuator gemäß einem der Ansprüche 1 bis 24, **dadurch gekennzeichnet, dass** die zentrale Stange (1) drehbar und axial arretiert ist und dass die externe Druckhülse (4) axial verschiebbar und bezüglich einer Rotation arretiert ist.

26. Aktuator gemäß einem der Ansprüche 1 bis 24, **dadurch gekennzeichnet, dass** die externe Druckhülse (4) drehbar und axial arretiert ist und dass die zentrale Stange (1) axial verschiebbar und bezüglich einer Rotation arretiert ist.
